# FASCICULE DE BREVET EUROPEEN

(11) **EP 1 956 792 B1**
(45) Date de publication et mention de la délivrance du brevet: **08.07.2015**
(21) Numéro de dépôt: 07121635.2
(22) Date de dépôt: 27.11.2007
(51) Int. Cl.: H04L 29/08, H04L 29/06

(54) **Dispositif d'aide au traitement de messages de signalisation pour un équipement de réseau de communication**
Procédé et dispositif de traitement d'opérandes dans une unité de processeur
Application identification in a SIP spiral traffic

(30) Priorité: 08.02.2007 FR 0753126
(43) Date de publication de la demande: 13.08.2008
(73) Titulaire: ALCATEL LUCENT, 92100 Boulogne-Billancourt (FR)
(72) Inventeur: Lebel, Christophe, 44115, HAUTE GOULAINE (FR); Froment, Thomas, 91310, LONGPONT SUR ORGE (FR)
(74) Mandataire: Sciaux, Edmond

(56) Documents cités:
- WO-A-2004/071104
- WO-A-2005/027459
- WO-A-2006/011017
- J. ROSENBERG ,H. SCHULZRINNE,G. CAMARILLO,A. JOHNSTON,J. PETERSON,R. SPARKS,M. HANDLEY,E. SCHOOLER: "SIP: Session Initiation Protocol"[Online] juin 2002 (2002-06), XP002449346 Extrait de l'Internet: URL:http://www.ietf.org/rfc/rfc3261.txt> [extrait le 2007-08-30]
- ANDERS KRISTENSEN: "JSR 116: SIP Servlet API"[Online] mars 2001 (2001-03), XP002449347 Extrait de l'Internet: URL:http://www.jcp.org/en/jsr/detail?id=11 6> [extrait le 2007-08-30]
- "IP Multimedia Call Control Protocol based on Session Initiation Protocol (SIP) and Session Description Protocol (SDP)"[Online] 10 janvier 2005 (2005-01-10), XP002449348 Extrait de l'Internet: URL:http://pda.etsi.org/pda/home.asp?wkr=R TS/TSGN-0124229v651> [extrait le 2007-08-30]

## Description

L'invention concerne les réseaux de communication, et plus particulièrement le traitement par certains équipements (ou éléments) de réseau de certains messages de signalisation qui leurs parviennent de façon répétée.

Tout type de réseau de communication mettant en oeuvre un protocole de signalisation de type bout-en-bout (ou « end-to-end ») et véhiculant des informations de routage, comme par exemple et non limitativement le protocole SIP (pour « Session Initiation Protocol » - défini par la RFC 3261 de l'IETF) et ses extensions, est concerné par la présente invention. Par conséquent, il pourra s'agir d'un réseau de communication fixe (ou filaire) ou sans fil (c'est-à-dire local ou mobile ou cellulaire ou encore radio), et plus généralement de tout type de réseau comportant des équipements (ou éléments) intermédiaires tels que des « proxies ».

Comme le sait l'homme de l'art, dans certains (coeurs) de réseaux de communication, comme par exemple les (coeurs) de réseaux (ou domaines) dits IMS (« Internet Multimedia (core network) Subsystem »), certains équipements (ou éléments) de réseau, comme par exemple des proxies de type S-CSCF (pour « Serving-Call Session Control Function ») ou P-CSCF (pour « Proxy-Call Session Control Function »), peuvent recevoir un même message de signalisation, par exemple de type SIP, plusieurs fois avant qu'il ne parvienne à son destinataire final. C'est ce que l'on appelle l'effet « spirale ». Les équipements de réseau, objets d'un tel effet spirale, sont souvent appelés équipements spirale. A titre d'exemple un proxy S-CSCF peut faire l'objet d'un effet spirale lorsqu'il échange des messages de signalisation avec un ou plusieurs proxies de serveurs d'application(s). De même un proxy P-CSCF peut faire l'objet d'un effet spirale lorsqu'il est impliqué dans une session de communication établie entre deux terminaux de communication connectés à un même réseau.

Chaque fois qu'un équipement spirale reçoit un message de signalisation initial relatif à une session de communication donnée, il doit lui appliquer une logique de contrôle et de traitement spécifique, dite logique d'application, à laquelle correspond un état. Ce dernier est stocké dans une mémoire locale afin de pouvoir être réutilisé pour des messages de signalisation suivants (messages de réponse, retransmission de messages de réponse, requêtes ultérieures), relatifs à la session de communication donnée. Un même message de signalisation initial peut donc entraîner la production de N (avec N≥2) états correspondants à N logiques d'applications pour une même session de communication.

Lorsqu'un équipement spirale reçoit un message de signalisation suivant (relatif à une session de communication donnée), et qu'il doit lui appliquer une logique d'application spécifique, il lui faut récupérer l'état correspondant qu'il a précédemment stocké. Cet état doit alors être déterminé parmi les N états stockés des logiques d'applications de la session de communication donnée. Ces N états sont actuellement indexés, d'une part, par un ensemble de paramètres de session, comme par exemple le triplet d'entêtes appelés « From » (source), « To » (destinataire) et « Call-id » (identifiant d'appel (ou de session)) dans le cas du protocole SIP, qui est le même pour tous les messages de signalisation d'une même session de communication, et d'autre part, par des paramètres de traitement et de routage, comme par exemple la paire de paramètres appelés « branch » (qui fait partie de l'entête « Via » et désigne un traitement à effectuer) et « top most route » (qui fait partie de l'entête « Record-route » et désigne le prochain élément auquel doit être transmis le message de signalisation reçu) dans le cas du protocole SIP.

Pour déterminer un état parmi N on est donc obligé de détecter les paramètres de traitement et de routage qui lui correspondent, ce qui n'est pas une chose aisée du fait qu'ils sont traités au niveau de la couche réseau du protocole de signalisation, par exemple SIP.

Pour améliorer la situation on pourrait par exemple utiliser certaines techniques conçues pour résoudre des problèmes différents de celui présenté ci-dessus. C'est notamment le cas de l'algorithme défini au quatrième paragraphe du chapitre 16.3 de la RFC 3261 de l'IETF (accessible à l'adresse « http://www.ietf.org/rfc/rfc3261.txt »), ou de l'environnement Java JSR116 version 2.2 (décrit à l'adresse « http://www.jcp.org/en/jsr/detail?id=116 »), ou encore de l'algorithme défini au chapitre 5.4.3.4 de la version 6.5.1 du standard 3GPP 24229. Cependant ces techniques ne permettent de résoudre que partiellement le problème de l'indexation des états des logiques d'applications d'une session de communication donnée, par exemple en imposant de mémoriser ou de transporter toutes les informations connues des paramètres « branch » des différentes sessions de communication.

Le document WO 2006/011017 A concerne un procédé de routage de sessions dans un protocole d'ouverture de session (SIP) utilisé dans un système de communication. Ce procédé consiste à utiliser un identificateur de ressource homogène d'agent utilisateur globalement routable (GRUU) pour identifier l'instance, le GRUU étant lié à un élément de commande de réseau de desserte de l'instance. Ce GRUU permet l'identification unique d'un équipement d'utilisateur et le routage fiable d'une session par l'intermédiaire de l'élément de commande de réseau, tel que S-CSCF, jusqu'à l'équipement d'utilisateur.

Cet identifiant GRUU permet de router un message de signalisation jusqu'à un équipement particulier, dans le but de résoudre la problématique d'un utilisateur possédant plusieurs équipements simultanément connectés au réseau.

Il n'est pas mentionné dans ce document d'identifiant d"etat destiné à être associé à un état de la logique d'application appliquée à un message de signalisation.

Aucune technique connue n'apportant une entière satisfaction, l'invention a donc pour but d'améliorer la situation.

Elle propose à cet effet un équipement de réseau comprenant des moyens de mémorisation et des moyens d'application agencés pour appliquer à certains messages de signalisation, relatifs à une session de communication donnée, des logiques d'applications et pour stocker dans ladite mémoire des états correspondant respectivement auxdites logiques d'applications.

Cet équipement de réseau se caractérise en ce qu'il comprend un dispositif d'aide au traitement de message de signalisation comprenant des moyens de traitement agencés, en cas d'application d'une logique d'application à l'un desdits messages de signalisation, pour adjoindre à ce message de signalisation, avant qu'il ne soit transmis, un identifiant d'état et pour stocker ce dernier dans les moyens de mémorisation en correspondance de l'état de la logique d'application qui lui a été appliquée.

Il est important de noter que cette logique d'application est en général liée à une session de communication qu'elle permet alors d'identifier de façon différente en fonction du nombre de passages dans la spirale (c'est-à-dire dans un même équipement (ou noeud) de réseau).

Le dispositif d'aide selon l'invention peut comporter d'autres caractéristiques qui peuvent être prises séparément ou en combinaison, et notamment :
- il peut comprendre des moyens d'analyse chargés, lorsque l'équipement de réseau reçoit un autre message suivant le message qui a fait l'objet de l'adjonction de l'identifiant d'état et qui comporte ce dernier, de déterminer dans les moyens de mémorisation l'état qui est stocké en correspondance de cet identifiant d'état, de sorte que l'équipement de réseau puisse appliquer à ce message suivant cet état de logique d'application ;
- en présence d'un protocole de signalisation appelé SIP, ses moyens de traitement peuvent être chargés d'adjoindre l'identifiant d'état dans un entête appelé « Via » du message de signalisation concerné. Par exemple, l'identifiant d'état peut être adjoint dans un paramètre appelé « branch » de l'entête Via ;
- en variante ou en complément, ses moyens de traitement peuvent être chargés d'adjoindre l'identifiant d'état dans un entête appelé « Record-route » du message de signalisation concerné. Par exemple, l'identifiant d'état peut être adjoint dans un paramètre appelé « oai » de l'entête Record-route.

L'invention propose également un réseau de communication comprenant au moins un équipement de réseau du type de celui présenté ci-avant.

L'invention est particulièrement bien adaptée, bien que de façon non exclusive, aux (coeurs de) réseau(x) de communication appelés IMS et à tout autre type de réseau comportant des équipements (ou éléments) intermédiaires basés sur le standard SIP de l'IETF.

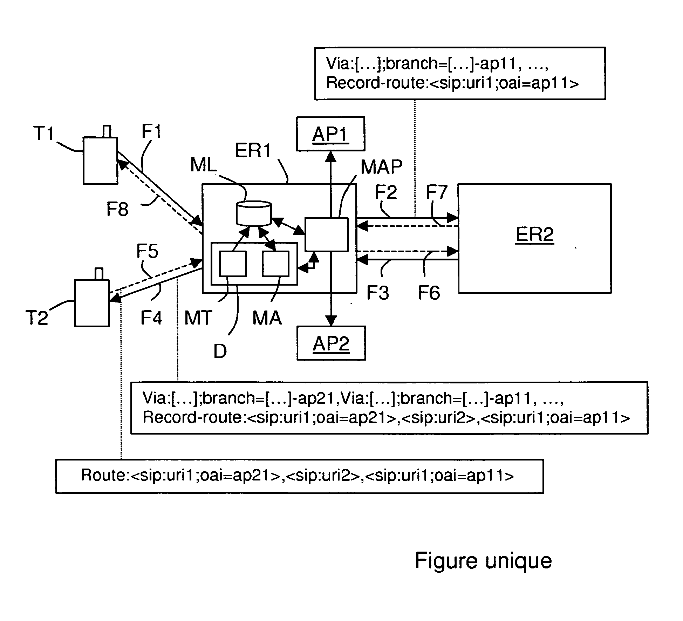

D'autres caractéristiques et avantages de l'invention apparaîtront à l'examen de la description détaillée ci-après, et du dessin annexé, sur lequel l'unique figure illustre de façon très schématique un équipement de réseau objet d'un effet spirale, équipé d'un exemple de réalisation d'un dispositif d'aide selon l'invention. Le dessin annexé pourra non seulement servir à compléter l'invention, mais aussi contribuer à sa définition, le cas échéant.

L'invention a pour objet de permettre la détermination par un équipement d'un (coeur de) réseau de communication, objet d'un effet spirale, de l'état de la logique d'application qu'il doit appliquer à un message de signalisation qui suit un message de signalisation initial et relatif à une même session de communication.

Dans ce qui suit, on considère à titre d'exemple non limitatif que les équipements de réseau font partie d'un (coeur de) réseau de communication de type IMS et que les terminaux de communication sont des téléphones mobiles connectés à ce réseau IMS via un réseau d'accès radio d'un réseau de téléphonie mobile ou cellulaire. Mais, l'invention n'est limitée ni à ce type de réseau de communication, ni à ce type de réseau d'accès, ni à ce type de terminal de communication.

Elle concerne en effet tout type de coeur de réseau de communication et de réseau d'accès permettant l'établissement de session(s) de communication entre des terminaux de communication au moyen d'un protocole de signalisation, et tout type d'équipement de communication capable de se connecter à un réseau (ou domaine) du type précité afin d'échanger des données avec un autre équipement de communication. Par conséquent, le réseau de communication pourra être un réseau fixe, comme par exemple un réseau xDSL, ou encore un domaine d'un réseau local sans fil (standards WLAN (« Wireless Local Area Network » - IEEE 802.11, Wi-Fi, ETSI HiperLAN/2), Bluetooth (IEEE 802.15), WiMAX (IEEE 802.16, ETSI HiperMAN) et Zigbee). De même, les terminaux de communication pourront être, par exemple, des téléphones fixes ou des assistants personnels numériques (ou PDAs) communicants ou des ordinateurs fixes ou portables communicants.

Par ailleurs, on considère dans ce qui suit, à titre d'exemple non limitatif, que le protocole de signalisation est le protocole d'établissement de session appelé SIP (Session Initiation Protocol). Mais, l'invention n'est pas limitée à ce type de protocole de signalisation. Elle concerne en effet tout type de protocole de signalisation de type bout-en-bout (ou « end-to-end ») et véhiculant des informations de routage exploitables par des noeuds de réseau dits intermédiaires. Par conséquent, dans cet exemple non limitatif les terminaux de communication sont équipés d'un agent SIP et sont donc joignables au moyen d'un identifiant public d'utilisateur (ou PUI pour « Public User Identity ») de type SIP URI (défini par les RFC 3261 et RFC 2396 et se présentant généralement sous la forme « sip:name@domain »).

De plus, on considère dans ce qui suit, à titre d'exemple non limitatif, que les équipements de réseau faisant l'objet d'un effet spirale sont des noeuds intermédiaires de type proxy SIP, comme par exemple des proxies de type IMS/S-CSCF ou IMS/P-CSCF. Mais, l'invention n'est pas limitée à ce type d'équipement de réseau. Elle concerne en effet tout type d'équipement (ou élément) de réseau susceptible de faire l'objet d'un effet spirale lorsqu'il échange des messages de signalisation avec un ou plusieurs autres équipements (ou éléments) de réseau se comportant comme des noeuds intermédiaires.

Il est rappelé qu'un proxy P-CSCF est un module de contrôle de session IMS. Il est le premier point de contact avec un réseau (ou domaine) IMS pour un terminal (de communication) d'un utilisateur abonné. Ce module P-CSCF comprend une fonction CSCF assurant le routage de messages selon le protocole SIP. Il assure généralement, et notamment, une fonction de sécurité, une fonction de contrôle du plan d'utilisateur (ou « user plane »), une fonction de compression SIP, une fonction de génération d'identifiants de taxation, une fonction d'assertion d'identité de l'abonné, une fonction de correspondance entre l'adresse publique et l'adresse IP de l'abonné, et une fonction de gestion de routage vers et depuis un autre module de contrôle de session de type proxy S-CSCF.

Le module de type S-CSCF constitue la porte d'entrée vers les services IMS offerts par le réseau IMS. A cet effet, il est connecté à un ou plusieurs serveurs d'application(s). Il est notamment chargé de l'authentification des abonnés et du stockage de l'adresse du module P-CSCF auquel est raccordé le terminal d'un abonné IMS. Ce module S-CSCF est couplé à la base de données de souscription appelée HSS (pour « Home Subscriber Server ») afin de récupérer des informations sur les abonnés et d'y stocker les adresses connues de ces derniers.

Comme cela est schématiquement et fonctionnellement illustré sur l'unique figure, l'invention propose d'implanter dans (ou de coupler à) un équipement de réseau ER1 (par exemple un proxy S-CSCF) un dispositif D destiné à l'aider à traiter des messages de signalisation qui sont conformes à un protocole de signalisation de type bout-en-bout et véhiculant des informations de routage, comme par exemple SIP.

Cet équipement de réseau ER1 comprend un module d'application MAP qui est chargé d'appliquer à certains messages de signalisation reçus, en provenance d'un terminal de communication Ti ou bien d'un autre équipement de réseau ER2, des (au moins deux) logiques d'applications APj désignées dans le message de signalisation reçu. On notera cependant, que le module d'application MAP ne doit généralement appliquer que l'une des logiques d'applications APj prévues lors de chaque passage du message de signalisation considéré dans l'équipement de réseau ER1. En d'autres termes, si le message de signalisation désigne N logiques d'applications, elles seront appliquées à ce message de signalisation les unes après les autres à chacun de ses N passages dans l'équipement de réseau ER1.

Il est important de noter que chaque logique d'application est matérialisée par un état (ou « session d'application ») qui est déduit du premier message de signalisation initialement traité, et qui peut être différent à chacun des N passages du message dans un même noeud du réseau.

Par exemple, lorsque l'équipement de réseau ER1 reçoit du premier terminal T1 (i=1) un message de signalisation, par exemple de type « SIP INVITE » ou « SIP REGISTER », son module d'application MAP analyse son contenu, et notamment ses entêtes (ou « headers »), afin de déterminer la logique d'application (par exemple AP1) qu'il doit lui appliquer. A cette logique d'application AP1 correspond un état.

Dans un équipement de réseau ER1 classique, le module d'application MAP stocke dans la mémoire ML l'état correspondant à la logique d'application qu'il vient d'appliquer afin de pouvoir le récupérer ultérieurement pour l'appliquer à un message de signalisation suivant relatif à la même session.

Les moyens de mémorisation ML se présentent par exemple sous la forme d'une mémoire. Mais, tout autre type de moyen de mémorisation peut être envisagé, et notamment une base de données ou un registre.

Le dispositif d'aide D est chargé d'aider l'équipement de réseau ER1 à récupérer facilement dans la mémoire ML l'état d'une logique d'application donnée lorsque cette dernière doit être de nouveau appliquée à un message de signalisation suivant relatif à la même session.

Pour ce faire, le dispositif d'aide D comprend un module de traitement MT chargé, lorsque le module d'application MAP vient d'appliquer une logique d'application APj à un message de signalisation, d'adjoindre à ce dernier un identifiant d'état, avant qu'il ne soit transmis vers un autre équipement de réseau ER2 ou vers un terminal de communication Ti. Le module de traitement MT stocke également cet identifiant d'état adjoint dans la mémoire ML en correspondance de l'état de la logique d'application qui lui a été appliquée.

On constitue ainsi une espèce de table établissant une correspondance entre des états et des identifiants d'état qui vont permettre de récupérer facilement un état à partir de l'identifiant d'état qui lui a été associé pour une session donnée.

Dans le cas d'un message de signalisation SIP, le module de traitement MT peut par exemple adjoindre l'identifiant d'état dans un entête appelé « Via » du message de signalisation concerné. Plus précisément, cet identifiant d'état peut par exemple être adjoint dans un paramètre appelé « branch » de l'entête Via.

Il est rappelé qu'un entête « Via » est défini au chapitre 16.6.8 de la RFC 3261. Il sert à indiquer le chemin que devra emprunter le message de signalisation répondant au message de signalisation qui le contient. Il est donc utilisé par un terminal de communication, situé à une extrémité d'une communication de bout-en-bout et équipé d'un agent d'utilisateur SIP (ou « SIP user agent »), pour ré-acheminer les messages de signalisation suivants, qui constituent des réponses sur une voie retour à un message de signalisation initial (ou requête, par exemple de type SIP INVITE), par les mêmes noeuds (ou équipements de réseau) que ceux par lesquels est précédemment passé ledit message de signalisation initial. Il est également rappelé que le paramètre « branch » d'un entête Via identifie une session (ou transaction) et donc l'état qui devra être utilisé pour accorder le message de réponse sur la requête correspondante.

Dans une variante ou bien en complément, le module de traitement MT peut par exemple adjoindre l'identifiant d'état dans un entête appelé « Record-route » du message de signalisation concerné. Plus précisément, cet identifiant d'état peut par exemple être adjoint dans un paramètre appelé « oai » de l'entête Via.

Il est rappelé qu'un entête « Record-Route » est défini au chapitre 16.6.4 de la RFC 3261. Il sert à un proxy à signaler qu'il veut demeurer sur le chemin emprunté par les messages de signalisation (ou requêtes) qui vont suivre le message de signalisation initial utilisé pour établir une communication (ou session). Il est donc utilisé par un terminal de communication situé, à une extrémité d'une communication de bout-en-bout et équipé d'un agent d'utilisateur SIP (ou « SIP user agent »), pour router des messages de signalisation, qui suivent un message de signalisation initial, par les noeuds qui en ont fait la demande sur le chemin aller. Plus précisément, chaque terminal de communication situé, à une extrémité d'une communication de bout-en-bout et équipé d'un agent d'utilisateur SIP (ou « SIP user agent »), convertit chaque entête Record-route en une route. Par conséquent un identifiant d'état contenu dans un entête Record-route d'un message initial d'une session se retrouve forcément dans chaque requête suivante qui concerne la même session.

On notera que le module de traitement MT peut adjoindre un identifiant d'état à la fois dans un entête Via et dans un entête Record-route d'un même message de signalisation SIP.

Les entêtes Via et Record-route sont particulièrement avantageux car ils font partie des entêtes des messages SIP qui sont toujours analysés en vue de leur routage.

Par ailleurs, lorsqu'un équipement de réseau ER1 doit appliquer N logiques d'applications AP1 à APN à un même message de signalisation lors de N réceptions successives, son dispositif d'aide D adjoint donc N identifiants d'état à ce message de signalisation.

On notera également que cette adjonction se fait dans le premier message de signalisation relatif à une session donnée, comme par exemple dans un message SIP INVITE ou SIP REGISTER, mais pas dans un message de réponse à un premier message de signalisation. On comprendra qu'un message de réponse ou une requête suivante comportent certains au moins des identifiants d'état qui ont été précédemment adjoints dans un premier message de signalisation relatif à la même session.

L'exemple illustré sur l'unique figure permet de mieux comprendre cette adjonction. Dans cet exemple, le premier terminal T1, qui est connecté à un réseau IMS comprenant notamment un proxy S-CSCF ER1 et un autre équipement de réseau ER2 (par exemple un proxy I-CSCF (pour « Interrogating-Call Session Control Function »)), désire par exemple établir une communication (session) avec un second terminal T2. Le premier terminal T1 génère donc un message SIP INVITE à destination du second terminal T2. Ce message SIP INVITE parvient au niveau du proxy C-CSCF ER1 (flèche F1), où son module d'application MAP l'analyse et détermine qu'il doit lui appliquer une première logique d'application AP1. Cette application correspond à un état E11 de la première logique d'application AP1 qui est alors stocké dans la mémoire ML. Le dispositif d'aide D, qui surveille les opérations effectuées par le module d'application MAP (ou qui est averti par ce dernier chaque fois qu'il stocke un état de logique d'application dans la mémoire ML), adjoint alors au message SIP INVITE un premier identifiant d'état ap11 choisi et stocke ce dernier dans la mémoire ML en correspondance de l'état E11 concerné.

Par exemple, l'adjonction du premier identifiant d'état ap11 se fait dans un entête Via du message SIP INVITE au moyen d'un séparateur de type « ; » (conformément à la syntaxe du protocole SIP). Cela peut ainsi donner « Req Via:[...];branch=[...]-ap11 ». Selon le mode de réalisation du module d'application MAP, on peut ajouter (ou adjoindre) un paramètre au champ Via ou bien agréger l'identifiant d'état au paramètre branch. Il est rappelé que la plupart des « piles » protocolaires SIP utilisent déjà le champ « branch » comme identifiant pour accepter les réponses et rediriger les réponses.

On notera qu'au lieu d'adjoindre le premier identifiant d'état ap11 de E11 dans un entête Via, ou bien en complément, il peut être (également) adjoint dans le (ou les) entête(s) Record-Route du noeud intermédiaire qui souhaite rester sur le chemin des messages relatifs. Cela peut ainsi donner « Record-route:<sip:uri1;oai=ap11> ». Cette variante est plus particulièrement adaptée au cas d'une requête suivante (ou « subsequent request »).

Une fois la ou les adjonctions du premier identifiant ap11 effectuées dans le message SIP INVITE, le proxy S-CSCF ER1 le transmet (flèche F2) vers l'équipement de réseau ER2 qui est désigné en tant que prochain destinataire dans l'un de ses entêtes de routage.

L'équipement de réseau ER2 traite localement le message SIP INVITE en fonction d'informations qu'il contient, puis il le retransmet (flèche F3) vers le proxy S-CSCF ER1.

Ce message SIP INVITE parvient de nouveau dans le proxy S-CSCF ER1 (effet spirale), où son module d'application MAP l'analyse et détermine qu'il doit lui appliquer une seconde logique d'application AP2. Cette application correspond à un état E21 de la seconde logique d'application AP2 qui est alors stocké dans la mémoire ML. Le dispositif d'aide D adjoint alors au message SIP INVITE un second identifiant d'état ap21 choisi et stocke ce dernier dans la mémoire ML en correspondance de l'état E21 concerné.

Par exemple, l'adjonction du second identifiant d'état ap21 se fait dans un entête Via du message SIP INVITE au moyen d'un séparateur de type «;». Cela peut ainsi donner « Via:[...];branch=[...]-ap21 ». Comme indiqué ci-dessus, selon le mode de réalisation du module d'application MAP, on peut ajouter un paramètre au champ Via ou bien agréger l'identifiant d'état au paramètre branch.

On notera que cette seconde adjonction peut se faire devant la première au moyen d'un séparateur de type « , » (conformément à la syntaxe du protocole SIP). Cela peut ainsi donner « Via:[...];branch=[...]-ap21,Via:[...];branch=[...]-ap11 » (comme illustré au niveau de la flèche F4 de l'unique figure).

On notera par ailleurs qu'au lieu d'adjoindre le second identifiant d'état ap21 de E21 dans l'entête Via, ou bien en complément, il peut être (également) adjoint dans le (ou les) entête(s) Record-Route du noeud intermédiaire qui souhaite rester sur le chemin des messages relatifs. Cela peut ainsi donner « Record-route:<sip:uri1;oai=ap21> ».

On notera également que cette seconde adjonction peut se faire devant la première au moyen d'un séparateur de type « , ». Cela peut ainsi donner « Record-route:<sip:uri1;oai=ap21>,<sip:uri1;oai=ap11> », avec éventuellement interposition de <sip:uri2> entre <sip:uri1;oai=ap21> et <sip:uri1;oai=ap11> (comme illustré au niveau de la flèche F4 de l'unique figure).

Une fois la ou les adjonctions du second identifiant ap21 effectuées dans le message SIP INVITE (initial), le proxy S-CSCF ER1 le transmet (flèche F4) vers le second terminal T2 qui en est le destinataire final (désigné en tant que tel dans l'un des entêtes de routage).

Les flèches F5 à F8 matérialisent le chemin retour d'un message de signalisation (par exemple de type ACK, BYE, ou analogue) que le second terminal T2 transmet à destination du premier terminal T1 en réponse à sa demande d'établissement de communication (SIP INVITE). Bien entendu, d'autres types de réponse correspondront aux requêtes ultérieures. Il est important de noter que ce message de réponse comprend tous les identifiants d'état qui ont été adjoints par le dispositif D du proxy S-CSCF ER1 sur le chemin aller, afin que le premier terminal T1 puisse les avoir à sa disposition pour les messages de signalisation (ou requêtes) suivant(e)s concernant la même session.

A titre d'exemple (et comme illustré au niveau de la flèche F5 de l'unique figure), un message de signalisation constituant une requête suivant un message SIP INVITE peut être généré par le second terminal T2 en comportant les premiers ap11 et second ap21 identifiants d'état agencés comme suit : « Route:<sip:uri1;oai=ap21> »,<sip:uri2>,<sip:uri1;oai=ap11> ».

Afin de permettre au proxy S-CSCF ER1 de récupérer un état d'une logique d'application APj qu'il doit appliquer à un message de signalisation (ou requête) qui suit un message de signalisation initial ayant fait l'objet d'une adjonction d'identifiants d'état, et qui concerne la même session, le dispositif d'aide D peut comprendre un module d'analyse MA.

Ce dernier (MA) intervient lorsque son proxy S-CSCF ER1 reçoit un message de signalisation qui suit un message de signalisation initial ayant fait l'objet d'adjonctions d'identifiants d'état et qui comporte ces derniers. Plus précisément, consécutivement à une telle réception le module d'analyse MA détermine dans la mémoire ML l'état qui s'y trouve stocké en correspondance de l'identifiant de l'état de la logique d'application APj qu'il doit appliquer au message reçu et qui contient ledit identifiant d'état.

Le module d'analyse MA communique alors l'état déterminé au module d'application MAP de son proxy S-CSCF ER1 afin qu'il l'applique au message suivant qui vient d'être reçu.

Par exemple, lorsqu'un message de signalisation de type requête suivant un message initial parvient dans un proxy, le proxy doit retirer de cette requête l'entête « top most route » qu'il contient s'il le désigne. Puis il transmet cette requête après lui avoir appliqué l'état de la logique d'application concernée.

Par exemple, lorsqu'un message de réponse parvient dans un proxy, le proxy essaye de l'accorder avec la session (ou transaction) à laquelle il correspond grâce au paramètre branch du « top most Via » qu'il contient. En cas d'accord, le proxy doit alors retirer l'entête Via concerné et transmettre le message de réponse conformément au chapitre 16.7.9 de la RFC 3261, après lui avoir appliqué l'état de la logique d'application concernée qui est identifié par l'identifiant d'état contenu dans le paramètre branch de l'entête Via. On notera que cela s'applique également au cas où le proxy doit retransmettre le message de réponse dans un mode dit sans état (ou « stateless »). Un tel cas peut par exemple survenir pour des messages de réponse de la famille dite 200 (ou plus généralement 2xx) générés consécutivement à un message SIP INVITE, soit lorsqu'un proxy de type peigne (ou « forking » - c'est-à-dire comportant une entrée et N sorties - voir notamment les chapitres 16.7.5 et 17.2.1 de la RFC 3261) est présent sur le chemin emprunté, soit lorsque le message de type 2xx est retransmis le long du chemin (voir notamment les chapitres 13.3.1.4 et 17.1.1.2 de la RFC 3261).

Il est rappelé que la plupart des « piles » protocolaires SIP utilisent le paramètre « branch » afin d'identifier les réponses à une requête (comme défini dans la RFC 3261). Ce paramètre branch constitue un état qui est défini comme une transaction cliente dans la RFC 3261 et qui respecte un cycle (défini dans le chapitre 17) devant se terminer lors de la réception de la première réponse à une requête INVITE. Dans ce cas, il est nécessaire de disposer d'un mécanisme garantissant que l'on appliquera la même logique d'application que celle exécutée lors de la réponse associée à la transaction, sur les retransmissions et autres réponses qui pourraient survenir au delà de la transaction initiale relative à une requête INVITE. L'identifiant d'état qui est défini dans la présente invention peut être utilisé dans un contexte de spirale comme une clé identique pour ce besoin et pour les requêtes suivantes dans le dialogue. Tel n'est pas le cas de la clé qui est formée des entêtes Call-id et du paramètre tag des entêtes source (« From ») et destinataire (« To »), car elle demeure constante lors de chaque passage dans la spirale.

Le dispositif d'aide D selon l'invention, et notamment son module de traitement MT et son éventuel module d'analyse MA, sont préférentiellement réalisés sous la forme de modules logiciels (ou informatiques) ou d'une combinaison de circuits électroniques et de modules logiciels. Mais, ils pourraient également être réalisés sous la forme de circuits électroniques.

L'invention respectant notamment la RFC 3261 qui définit le protocole SIP, elle peut être mise en oeuvre dans n'importe quel équipement de réseau objet d'un effet spirale et situé sur un chemin de session auquel appartient n'importe quel type d'acteur (équipement ou élément) SIP. Par ailleurs, la solution offerte par l'invention étant transparente et n'enfreignant pas la définition de la RFC 3261 relative aux proxies SIP, elle ne nécessite pas la présence d'agents d'utilisateurs SIP de type B2BUA (pour « Back-to-Back User Agent »). De plus, en permettant une espèce d'encodage des logiques d'applications d'une session dans les messages de signalisation, l'invention permet d'effectuer une répartition de la charge de trafic SIP (ou « load balancing ») plus fine que celle jusqu'alors effectuée au moyen de l'identifiant de dialogue (ou « dialog identifier »). En outre, l'utilisation d'un même identifiant d'état pour les réponses et les requêtes suivantes permet de simplifier les agents SIP, et ainsi d'améliorer leur robustesse, en évitant l'utilisation de table d'association d'identifiants dont il faudrait garantir le cycle de vie en accord avec le protocole SIP et l'application concernée.

L'invention ne se limite pas aux modes de réalisation de dispositif d'aide, d'équipement de réseau et de réseau de communication décrits ci-avant, seulement à titre d'exemple, mais elle englobe toutes les variantes que pourra envisager l'homme de l'art dans le cadre des revendications ci-après.

## Revendications

1. Equipement de réseau (ER1) pour un réseau de communication, ledit équipement (ER1) comprenant des moyens de mémorisation (ML) et des moyens d'application (MAP) agencés pour appliquer à certains messages de signalisation, relatifs à une session de communication donnée, des logiques d'applications et pour stocker dans ladite mémoire (ML) des états correspondant respectivement auxdites logiques d'applications, **caractérisé en ce qu'**il comprend un dispositif d'aide (D) au traitement de message de signalisation comprenant des moyens de traitement (MT) agencés, en cas d'application d'une logique d'application à l'un desdits messages de signalisation, pour adjoindre à ce message de signalisation, avant qu'il ne soit transmis, un identifiant d'état et pour stocker ce dernier dans lesdits moyens de mémorisation (ML) en correspondance de l'état de la logique d'application qui lui a été appliquée.

2. Equipement selon la revendication précédente, **caractérisé en ce que** ledit dispositif d'aide comprend en outre des moyens d'analyse (MA) agencés, en cas de réception d'un autre message suivant ledit message objet de l'adjonction de l'identifiant d'état et comportant cet identifiant d'état, pour déterminer dans lesdits moyens de mémorisation (ML) l'état stocké en correspondance de cet identifiant d'état, de sorte que ledit équipement (ER1) puisse appliquer audit message suivant cet état de logique d'application.

3. Equipement selon l'une des revendications 1 et 2, **caractérisé en ce qu'**en présence d'un protocole de signalisation appelé SIP, lesdits moyens de traitement (MT) sont agencés pour adjoindre ledit identifiant d'état dans un entête appelé « Via » du message de signalisation concerné.

4. Equipement selon la revendication 3, **caractérisé en ce que** ledit identifiant d'état est adjoint dans un paramètre appelé « branch » dudit entête Via.

5. Equipement selon l'une des revendications 1 à 4, **caractérisé en ce qu'**en présence d'un protocole de signalisation appelé SIP, lesdits moyens de traitement (MT) sont agencés pour adjoindre ledit identifiant d'état dans un entête appelé « Record-route » du message de signalisation concerné.

6. Equipement selon la revendication 5, **caractérisé en ce que** ledit identifiant d'état est adjoint dans un paramètre appelé « oai » dudit entête Record-route.

7. Equipement de réseau selon l'une des revendications précédentes, mettant en oeuvre les fonctions d'un proxy CSCF.

8. Réseau de communication, **caractérisé en ce qu'**il comprend au moins un équipement de réseau (ER1) selon l'une des revendications précédentes

## Patentansprüche

1. Netzausrüstung (ER1) für ein Kommunikationsnetz, wobei besagte Ausrüstung (ER1) Speichermedien (ML) und Applikationsmittel (MAP) umfasst, die so angeordnet sind, dass sie auf bestimmte Signalgebungsnachrichten, die sich auf einen gegebenen Kommunikationszeitraum beziehen, Applikationslogiken anwenden und in besagtem Speicher (ML) Zustände festhalten, die jeweils besagten Applikationslogiken entsprechen, **dadurch gekennzeichnet, dass** sie eine Hilfsvorrichtung (D) zur Verarbeitung von Signalgebungsnachrichten umfasst, die kombinierte Verarbeitungsmittel (MT) enthält, für den Fall der Anwendung einer Applikationslogik auf eine der besagten Signalgebungsnachrichten, um dieser Signalgebungsnachricht vor ihrer Übertragung eine Zustandsidentifizierung hinzuzufügen und um letztere in besagten Speichermitteln (ML) in Übereinstimmung mit dem Zustand der Applikationslogik, die auf sie angewendet wurde, festzuhalten.

2. Ausrüstung nach dem vorstehenden Anspruch, **dadurch gekennzeichnet, dass** besagte Hilfsvorrichtung unter anderem kombinierte Analysemittel (MA) enthält, für den Fall, dass eine andere Nachricht auf besagte Nachricht folgt, deren Gegenstand die Hinzufügung der Zustandsidentifizierung ist und welche diese Zustandsidentifizierung umfasst, damit in besagten Speichermedien (ML) der gespeicherte Zustand, der zu dieser Zustandsidentifizierung passt, bestimmt wird, sodass besagte Ausrüstung (ER1) auf die jeweilige folgende Nachricht diesen Applikationslogikzustand anwenden kann.

3. Ausrüstung nach Anspruch 1 oder 2, **dadurch gekennzeichnet, dass**, wenn ein SIP genanntes Signalgebungsprotokoll vorliegt, besagte Verarbeitungsmittel (MT) so angeordnet sind, dass sie besagte Zustandsidentifizierung in einem "Via" genannten Nachrichtenkopf der betroffenen Signalgebungsnachricht ergänzen.

4. Ausrüstung nach Anspruch 3, **dadurch gekennzeichnet, dass** besagte Zustandsidentifizierung innerhalb eines "Branch" genannten Parameters selbigem Via Nachrichtenkopf hinzugefügt wird.

5. Ausrüstung nach einem der Ansprüche 1 bis 4, **dadurch gekennzeichnet, dass**, wenn ein SIP genanntes Signalgebungsprotokoll vorliegt, besagte Verarbeitungsmittel (MT) so angeordnet sind, dass sie besagter Zustandsidentifizierung in einem "Record-route" genannten Nachrichtenkopf der betroffenen Signalgebungsnachricht hinzugefügt werden.

6. Ausrüstung nach Anspruch 5, **dadurch gekennzeichnet, dass** besagte Zustandsidentifizierung innerhalb eines "oai" genannten Parameters besagtem Record-route Nachrichtenkopf hinzugefügt wird.

7. Netzausrüstung nach einem beliebigen der vorstehenden Ansprüche, welche die Funktionen eines CSCF Proxy-Servers umsetzt.

8. Kommunikationsnetz, **dadurch gekennzeichnet, dass** es mindestens eine Netzausrüstung (ER1) nach einem der vorstehenden Ansprüche enthält.

## Claims

1. A network device (ER1) for a communication network, said device (ER1) comprising memorization means (ML) and application means (MAP) arranged to apply application logics to certain signaling messages, related to a given communication session, and to store within said memory (ML) states corresponding respectively to said application logics, **characterized in that** it comprises a signaling message processing assistance apparatus (D) comprising processing means (MT) arranged, in the event an application logic is applied to one of said signaling messages, to attach to that signaling message, before it is transmitted, a state identifier and to store that state identifier in said memorization means (ML) as a match for the state of the application logic applied thereto.

2. A device according to the preceding claim, **characterized in that** said assistance apparatus further comprises analysis means (MA) arranged, in the event another message is received following said message to which the state identifier was added and comprising that state identifier, to determine within said memorization means (ML) the state stored as a match for that state identifier, so that said device (ER1) can apply to said following message that application logic state.

3. A device according to one of the claims 1 and 2, **characterized in that** in the presence of a signaling protocol called SIP, said processing means (MT) are arranged to attach said state identifier into a header called "Via" of the signaling message in question.

4. A device according to claim 3, **characterized in that** said state identifier is attached in a parameter called "branch" of said Via header.

5. A device according to one of the claims 1 to 4, **characterized in that** in the presence of a signaling protocol called SIP, said processing means (MT) are arranged to attach said state identifier in a header called "Record-route" of the signaling message in question.

6. A device according to claim 5, **characterized in that** said state identifier is attached in a parameter called "oai" of said Record-route header.

7. A network device according to one of the preceding claims, implementing the functions of a CSCF proxy.

8. A communication network, **characterized in that** it comprises at least one network device (ER1) according to one of the preceding claims.
